Europäisches Patentamt

European Patent Office

Office européen des brevets

(11) Veröffentlichungsnummer: **0 031 901**
**B1**

(12) **EUROPÄISCHE PATENTSCHRIFT**

(45) Veröffentlichungstag der Patentschrift:
22.12.82

(51) Int. Cl.³: **C 04 B 7/44, F 27 B 7/20**

(21) Anmeldenummer: 80107556.5

(22) Anmeldetag: 03.12.80

(54) Verfahren zur Wärmebehandlung von feinkörnigem Gut.

(30) Priorität: 08.01.80 DE 3000494

(43) Veröffentlichungstag der Anmeldung:
15.07.81 Patentblatt 81/28

(45) Bekanntmachung des Hinweises auf die Patenterteilung:
22.12.82 Patentblatt 82/51

(84) Benannte Vertragsstaaten:
**BE DE FR GB IT**

(56) Entgegenhaltungen:
**DE-A-2 365 591**
**DE-A-2 420 322**
**DE-A-2 451 115**
**FR-A-2 281 792**
**FR-A-2 337 698**

(73) Patentinhaber: **Krupp Polysius AG,**
**Graf-Galen-Strasse 17, D-4720 Beckum (DE)**

(72) Erfinder: **Goldmann, Wolf, Agnes-Miegel-Strasse 9,**
**D-4720 Beckum (DE)**

(74) Vertreter: **Tetzner, Volkmar, Dr.-Ing. Dr. Jur.,**
**Van-Gogh-Strasse 3, D-8000 München 71 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Wärmebehandlung von feinkörnigem Gut

Die Erfindung betrifft ein Verfahren zur Wärmebehandlung von feinkörnigem Gut, insbesondere von Zementrohmehl, unter Verwendung einer Brennzone, einer von den Abgasen der Brennzone durchsetzten ersten Vorwärmzone, einer Kühlzone, einer von Abluft der Kühlzone durchsetzten und mit zusätzlichem Brennstoff versorgten Vorkalzinationszone und einer von den Abgasen der Vorkalzinationszone durchströmten zweiten Vorwärmzone, wobei den beiden Vorwärmzonen jeweils Teilmengen des Gutes zugeführt werden und das gesamte vorgewärmte Gut anschliessend in die Vorkalzinationszone eingeführt wird.

Verfahren der vorstehend genannten Art sind beispielsweise durch die DE-A-2 420 322, DE-A-2 451 115 und FR-A-2 337 698 bekannt. Die beiden Vorwärmzonen werden hierbei durch je einen mehrstufigen Zyklonvorwärmer gebildet, wobei die in den beiden Vorwärmsträngen vorgewärmten Teilmengen des Gutes entweder vor ihrer Einführung in die Vorkalzinationszone oder in der Vorkalzinationszone miteinander vereinigt werden.

Dabei wird in den mit Abgas der Brennzone (Drehrohrofenabgas) beheizten Vorwärmstrang stets auch ein beträchtlicher Anteil von staubförmigem Gut zurückgeführt, das schon vollständig entsäuert ist. Die Teilmenge des Gutes, die aus dem mit Ofenabgas versorgten Vorwärmstrang in die Vorkalzinationszone gelangt, besitzt daher durchweg einen höheren Entsäuerungsgrad als die Teilmenge des Gutes aus dem anderen Vorwärmstrang. Um ein Überbrennen des Gutes in der Vorkalzinationszone und dadurch bedingte Anbackungen zu vermeiden, kann im Hinblick auf diese Unterschiede im Entsäuerungsgrad des vorgewärmten Gutes die Brennstoffzugabe in der Vorkalzinationszone nicht so hoch gewählt werden, wie dies an sich zur möglichst vollständigen Entsäuerung der Gutteilmenge erwünscht wäre, die aus dem mit Kühlerluft beaufschlagten Vorwärmstrang kommt.

Es ist weiterhin ein Verfahren zur Wärmebehandlung von feinkörnigem Gut bekannt (FR-A-2 281 792), das drei jeweils von einem Teilstrom des Gutes durchsetzte Vorwärmzonen und zwei Vorkalzinationszonen verwendet. Hierbei wird die Abluft der Kühlzone in zwei Teilströme aufgeteilt, die den beiden Vorkalzinationszonen zugeführt werden. Zwei der drei Vorwärmstränge werden jeweils von den Abgasen der beiden Vorkalzinationszonen durchströmt, während der dritte Vorwärmstrang von den Abgasen der Brennzone (eines Drehrohrofens) durchsetzt wird. Das in dieser dritten Vorwärmzone vorgewärmte Gut wird in zwei Teilströme aufgeteilt, von denen je ein Teilstrom in die beiden Vorkalzinationszonen gelangt. In diese beiden Vorkalzinationszonen wird ausserdem jeweils die Gutmenge eingeführt, die in dem betreffenden Vorwärmstrang mit den Abgasen dieser Vorkalzinationszone vorgewärmt wurde.

Auch dieses bekannte Verfahren ist daher mit dem oben bereits erwähnten Nachteil behaftet, dass die Teilmenge des Gutes, die aus dem mit Ofenabgas versorgten Vorwärmstrang in die beiden Vorkalzinationszonen gelangt, wegen des beträchtlichen Anteiles an rückgeführtem Gut einen höheren Entsäuerungsgrad als das übrige Gut besitzt. Dadurch werden die Möglichkeiten der Brennstoffzugabe in den beiden Vorkalzinationszonen begrenzt, wenn Anbackungen durch Überhitzung von Gutteilchen vermieden werden sollen. Ungünstig ist ferner bei dem bekannten Verfahren der durch die Verwendung von drei parallel geschalteten Vorwärmsträngen und von zwei Vorkalzinationszonen bedingte erhebliche anlagentechnische Aufwand.

Der Erfindung liegt daher die Aufgabe zugrunde, unter Vermeidung dieses Nachteiles ein Verfahren der eingangs genannten Art so auszubilden, dass ohne die Gefahr störender Ansatzbildungen eine möglichst weitgehende Entsäuerung des Gutes in der Vorkalzinationszone erreicht wird.

Diese Aufgabe wird erfindungsgemäss durch die Kombination folgender Merkmale gelöst:

a) Die Abluft der Kühlzone wird vor Einführung in die Vorkalzinationszone in zwei Teilströme aufgeteilt, in die die aus den beiden Vorwärmzonen kommenden Teilmengen des Gutes eingeführt werden;

b) diesen beiden, jeweils aus vorgewärmtem Gut und Abluft der Kühlzone bestehenden Teilströmen werden noch vor ihrer Vereinigung gesondert dosierbare Brennstoffmengen zugesetzt.

Bei dem erfindungsgemässen Verfahren werden somit die aus den beiden Vorwärmzonen kommenden Gutströme teilweise schon entsäuert, ehe sie miteinander im Hauptteil der Vorkalzinationszone vereinigt werden. Die gesondert dosierbare Brennstoffzugabe zu den beiden Teilströmen des vorgewärmten Gutes ermöglicht eine Anpassung der zugesetzten Brennstoffmenge an den unterschiedlichen Entsäuerungsgrad des Gutes beider Teilströme. Auf diese Weise kann insbesondere durch eine geringere Brennstoffzugabe zu dem mittels der Ofenabgase vorgewärmten Teilstrom der durch den rückgeführten Ofenstaub höhere Entsäuerungsgrad dieses Teilstromes berücksichtigt werden.

Das erfindungsgemässe Verfahren gestattet es damit, eine maximale Entsäuerung des Gutes in der Vorkalzinationszone vor Einführung in die Brennzone zu erreichen, ohne dass hierbei die Gefahr von Ansatzbildungen in der Vorkalzinationszone besteht.

Da für das erfindungsgemässe Verfahren nur zwei Vorwärmstränge und eine einzige Vorkalzinationszone benötigt werden, ergibt sich im Vergleich zu dem Verfahren gemäss FR-A-2 281 792 eine wesentliche anlagentechnische Vereinfachung.

Ein Ausführungsbeispiel einer Anlage zur Durchführung des erfindungsgemässen Verfahrens ist in den Zeichnungen veranschaulicht.

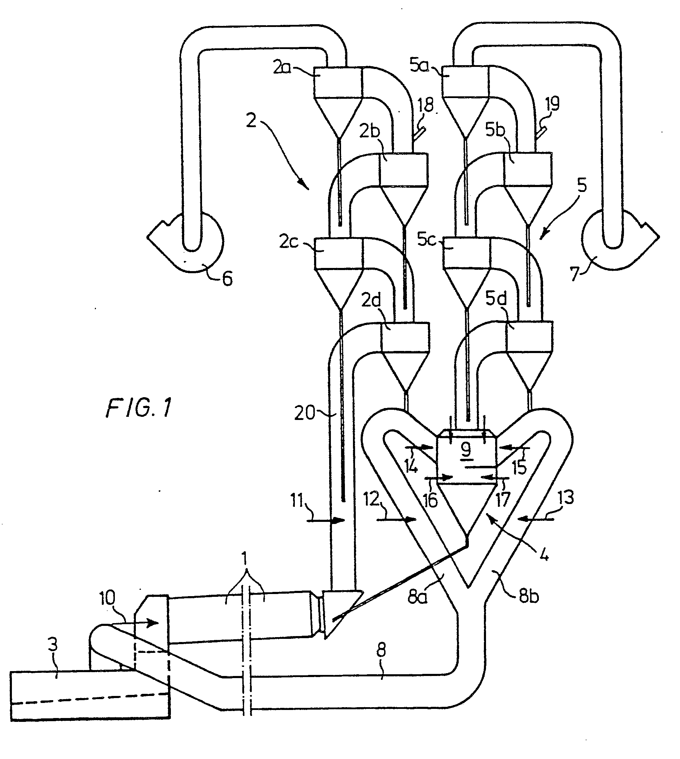

Die Anlage gemäss Fig. 1 enthält einen die Brennzone bildenden Drehrohrofen 1, einen von den Abgasen des Drehrohrofens 1 durchströmten, die erste Vorwärmzone bildenden Zyklonvorwärmer 2, eine Kühlzone 3, eine von Abluft der Kühlzone durchsetzte und mit zusätzlichem Brennstoff versorgte Vorkalzinationszone 4 und einen die zweite Vorwärmzone bildenden, von den Abgasen der Vorkalzinationszone 4 durchströmten Zyklonvorwärmer 5.

Den beiden Zyklonvorwärmern 2 und 5 sind gesonderte Ventilatoren 6 bzw. 7 zugeordnet. Die beiden Zyklonvorwärmer 2 und 5 bestehen jeweils aus vier Zyklonen 2a bis 2d bzw. 5a bis 5d.

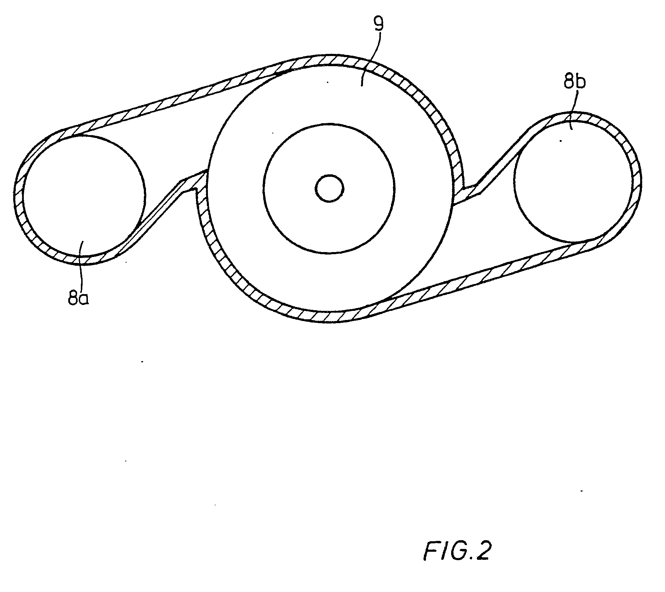

Von der Kühlzone 3 führt eine Leitung 8 zur Vorkalzinationszone 4. Sie teilt sich in zwei Leitungen 8a und 8b auf, die von entgegengesetzten Seiten, vorzugsweise einander diametral gegenüberliegend, tangential in einen mit zwei Gaseintritten versehenen Zyklon 9 einmünden (vgl. Fig. 2).

Folgende Brennstoffzuführungen sind vorgesehen: Bei 10 im Drehrohrofen 1, bei 11 in der vom Drehrohrofen 1 zum Zyklonvorwärmer 2 führenden Gasleitung, bei 12 und 13 in den von der Kühlzone 3 zur Vorkalzinationszone 4 führenden Leitungen 8a und 8b, bei 14 und 15 im Bereich des Eintritts der Leitungen 8a bis 8b in den Zyklon 9 und schliesslich bei 16 und 17 im unteren Teil des Zyklons 9.

Das Gut wird in zwei Teilmengen bei 18 und 19 den Zyklonvorwärmern 2 bzw. 5 aufgegeben und durchsetzt dann in bekannter Weise im Gegenstrom zu den heissen Gasen die vier Stufen dieser beiden Zyklonvorwärmer. Dabei kann das aus dem Zyklon 2c ausgetragene, in die Steigleitung 20 des Drehrohrofens 1 eingeführte Gut durch den bei 11 zugegebenen zusätzlichen Brennstoff eine Vorkalzination erfahren, ehe es nach Abscheidung im Zyklon 2d in die Leitung 8a gelangt, wo eine weitere Entsäuerung durch den bei 12 zugesetzten Brennstoff erfolgt, ehe sich diese Teilmenge des Gutes im Wirbelschacht 9 mit der anderen Teilmenge vereinigt. Diese andere, im Zyklonvorwärmer 5 vorgewärmte Teilmenge des Guts erfährt nach Abscheidung im Zyklon 5d eine Vorkalzination in der Leitung 8b durch den bei 13 zugesetzten Brennstoff, ehe sie in den Zyklon 9 gelangt. Durch den bei 14, 15, 16 und 17 zugesetzten Brennstoff wird das Gut praktisch vollständig entsäuert, ehe es in den Drehrohrofen 1 gelangt.

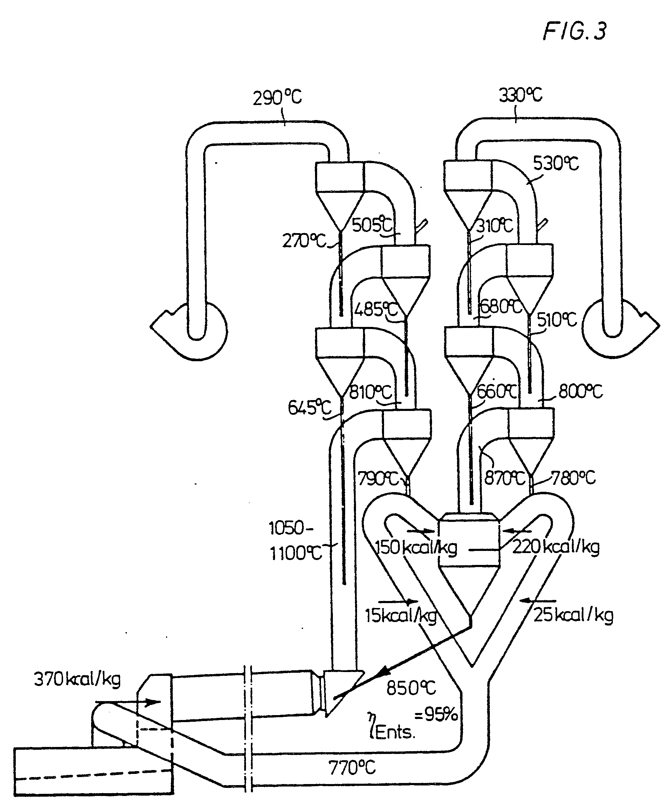

Fig. 3 veranschaulicht die Betriebsdaten einer nach dem erfindungsgemässen Verfahren arbeitenden Anlage zum Brennen von Zement. Im Bereich der Vorkalzinationszone werden insgesamt 410 kcal/kg Klinker Brennstoff zugesetzt, und zwar 165 kcal/kg Klinker für die mit den Ofenabgasen vorgewärmte Hälfte des Gutes und 245 kcal/kg Klinker für die mittels Kühlerabluft vorgewärmte Gutmenge. Aus der Vorkalzinationszone tritt das Gut mit einem Entsäuerungsgrad von ca. 95% in den Drehrohrofen ein. Die übrigen Material- und Gastemperaturen lassen sich Fig. 3 entnehmen. (1 kcal = 4,1868 · $10^3$ J)

## Patentanspruch

Verfahren zur Wärmebehandlung von feinkörnigem Gut, insbesondere von Zementrohmehl, unter Verwendung einer Brennzone, einer von den Abgasen der Brennzone durchsetzten ersten Vorwärmzone, einer Kühlzone, einer von Abluft der Kühlzone durchsetzten und mit zusätzlichem Brennstoff versorgten Vorkalzinationszone und einer von den Abgasen der Vorkalzinationszone durchströmten zweiten Vorwärmzone, wobei den beiden Vorwärmzonen jeweils Teilmengen des Gutes zugeführt werden und das gesamte vorgewärmte Gut anschliessend in die Vorkalzinationszone eingeführt wird, gekennzeichnet durch die Kombination folgender Merkmale:

a) Die Abluft der Kühlzone wird vor Einführung in die Vorkalzinationszone in zwei Teilströme aufgeteilt, in die die aus den beiden Vorwärmzonen kommenden Teilmengen des Gutes eingeführt werden;

b) diesen beiden, jeweils aus vorgewärmtem Gut und Abluft der Kühlzone bestehenden Teilströmen werden noch vor ihrer Vereinigung gesondert dosierbare Brennstoffmengen zugesetzt.

## Claim

Method of heat treatment of fine-grained material, especially crude cement dust, using a combustion zone, a first preheating zone through which the exhaust gases from the combustion zone pass, a cooling zone, a precalcination zone through which exhaust air from the cooler passes and which is supplied with additional fuel, and a second preheating zone through which the exhaust gases from the precalcination zone pass, in which partial quantities of the material are supplied to each of the two preheating zones and the total quantity of preheated material is then introduced into the precalcination zone, characterised by the combination of the following features:

a) Before the exhaust air from the cooling zone is introduced into the precalcination zone it is divided into two streams into which the partial quantities of the material coming from the two preheating zones are introduced;

b) These two streams, both consisting of preheated material and exhaust air from the cooler, have measured quantities of fuel added to them before they are combined.

## Revendication

Procédé de traitement thermique de matière à granulométrie fine, en particulier de farine crue de ciment, au moyen d'une zone de cuisson, d'une première zone de réchauffage balayée par les gaz d'échappement de la zone de cuisson, d'une zone de refroidissement, d'une zone de précalcination balayée par l'air sortant de la zone de refroidissement et alimentée en un complément de combustible et d'une seconde zone de réchauffage balayée par les gaz d'échappement de la zone de précalcination, des fractions de la quantité totale de la matière étant dirigées sur chacune des deux zones de réchauffage et la totalité de la matière réchauffée étant ensuite introduite dans la zone de précalcination, procédé caractérisé par la combinaison des particularités suivantes:

a) le flux d'air provenant de la zone de refroidissement est subdivisé avant son introduction dans la zone de précalcination en deux courants partiels dans lesquels sont introduites les fractions de la quantité totale de la matière qui proviennent des deux zones de réchauffage;

b) des quantités de combustible pouvant être dosées séparément sont additionnées encore avant leur réunion à ces deux courants partiels dont chacun se compose de matière réchauffée et d'air sortant de la zone de refroidissement.

FIG.1

FIG.2

FIG.3